# EUROPÄISCHE PATENTSCHRIFT

(11) **EP 2 226 650 B1**
(45) Veröffentlichungstag und Bekanntmachung des Hinweises auf die Patenterteilung: **17.08.2011**
(21) Anmeldenummer: 09003109.7
(22) Anmeldetag: 04.03.2009
(51) Int. Cl.: G01V 8/10

(54) **Optoelektronischer Sensor**
Optoelectronic sensor
Capteur optoélectronique

(43) Veröffentlichungstag der Anmeldung: 08.09.2010
(73) Patentinhaber: SICK AG, 79183 Waldkirch/Breisgau (DE)
(72) Erfinder: Hauske, Maximilian, 68161 Mannheim (DE); Tanbourgi, Ralph, 69115 Heidelberg (DE); Waslowski, Kai, 79312 Emmendingen (DE); Merettig, Gerhard, 79350 Sexau (DE)
(74) Vertreter: Manitz, Finsterwald & Partner GbR

(56) Entgegenhaltungen:
- EP-A- 2 015 110
- DE-A1- 4 035 710
- DE-A1- 19 926 214
- O'FARRELL T ET AL: "Performance of a spread spectrum infrared transmission system under ambient light interference" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, Bd. 2, 8. September 1998 (1998-09-08), Seiten 703-707, XP010314508 ISBN: 978-0-7803-4872-1

## Beschreibung

Die Erfindung betrifft einen optoelektronischen Sensor mit wenigstens einem Lichtsender zur Aussendung von Lichtsignalen in einen Überwachungsbereich und wenigstens einem Lichtempfänger zum Empfang von Lichtsignalen, wobei die empfangenen Lichtsignale im Lichtempfänger in elektrische Empfangssignale gewandelt werden. Sie betrifft ferner ein Verfahren zur Störungsunterdrückung gemäß dem Oberbegriff des Anspruchs 15.

Derartige Sensoren können beispielsweise als mehrstrahlige Lichtgittersysteme zur Zugangsüberwachung eingesetzt werden, wobei insbesondere gefährliche Maschinenarbeitsbereiche oder bestimmte Räume innerhalb eines Gebäudes abgesichert werden sollen.

Wenn bei Sensoren der genannten Art ein Objekt in den Überwachungsbereich gelangt und dadurch der Lichtweg zwischen Lichtsender und Lichtempfänger unterbrochen wird, kann über eine entsprechend ausgeführte Steuer- und/oder Auswerteeinrichtung insbesondere ein Objektfeststellungssignal generiert werden, das beispielsweise zum Abschalten einer Maschine und/oder zur Auslösung eines akustischen oder optischen Warnsignals führt.

Optoelektronische Sensoren werden in großem Umfang bei drahtlosen optischen Anwendungen wie beispielsweise zur Zielerfassung und Kurzstreckenkommunikation eingesetzt. Bei einem Einsatz in einer stark störungsbehafteten Umgebung können diese optoelektronischen Sensoren in ihrer Arbeitsweise so stark beeinträchtigt werden, dass es zu einer Fehldetektion kommt.

Bei den bisherigen Lichtschranken, Lichttastern und dergleichen wird eine Folge von gepulsten Signalen als Übertragungswellenform verwendet, wobei eine solche Wellenform als optische Leistung ausgestrahlt und anschließend auf der Seite des Lichtempfängers durch einen Fotodetektor aufgenommen wird.

Im Bereich der Radar- und Kommunikationstechnik wird ein so genanntes DSSS (Direct Sequence Spread Spectrum)-Frequenzspreizverfahren mit Erfolg eingesetzt, um die Zuverlässigkeit und Robustheit der Signale gegenüber Störungen zu verbessern. Solche Frequenzspreizverfahren sind in "Spread Spectrum Communications Handbook", Marvin K. Simon et al., McGraw-Hill, 1994, und "Spread Spectrum and CDMA: Principles and Applications", Valerie P. Ipatov, John Wiley and Sons, 2005, näher beschrieben.

Bei kognitiven Radarsystemen werden zusätzlich auch bereits Umgebungsinformationen verwendet, um eine Anpassung an die aktuelle Detektionsaufgabe und die Störungsumgebung zu erreichen. Solche kognitiven Radarsysteme sind beispielsweise in "Cognitive radar: a way of the future", Haykin, S., Signal Processing Magazine, IEEE, Volume: 23, Issue: 1 Jan. 2006, näher beschrieben.

Verschiedene Verfahren zur Störungsunterdrückung in DSSS-Kommunikationssystemen wie "Clipping" zur Verbesserung der Güte bei gepulsten Störungen sowie Verfahren zur Störungsunterdrückung auf der Basis einer Frequenzbereichsanalyse sind beispielsweise in den folgenden Veröffentlichungen näher beschrieben: "Interference suppression in spread spectrum systems", Proakis, J. G. Proc. IEEE 4th International Symposium on Spread Spectrum Technics and Applications, 1996, "Interference Avoidance Using Fractional Fourier Transform in Transform Domain Communication System", Wang Chuandan and Zang Zhongpei and Li Shaoqian, Advanced Communication Technology, The 9th International Conference on 2007, und "Frequency domain interference suppression in a DSSS System", Xiaowen Chen, Wei Guo, Yong Zheng, Communications, Circuits and Systems and West Sino Expositions, IEEE 2002, International Conference on 2002.

Reine pulsbasierte Signalisierungssysteme mit einer Störungssynchronisation, bei der Pulse mit dem Störsignal synchronisiert werden, sind nur dort effektiv, wo eine kleine Anzahl von Störsignalen auftritt. Von anderen Quellen, wie beispielsweise Umgebungslicht und Fluoreszenzlampen stammende Störungen beeinträchtigen dennoch die Übertragungsgüte, insbesondere dann, wenn die Pulse periodisch übertragen werden.

Das DSSS-Frequenzspreizverfahren bringt zwar bei schmalbandigen Störungen durch die Verwendung von Pseudorausch-Sequenzen, die ein weißes Spektrum besitzen, eine größere Robustheit mit sich, die sich in einem kleinen Korrelationskoeffizienten für eine große Anzahl von Störsignalen wiederspiegelt. Gleichwohl nimmt bei einer statischen Systemauslegung mit festen Spreizsequenzen und fehlender Adaptivität die Übertragungsgüte bei einer Zunahme der Störungsleistung ab.

Für optoelektronische Sensoren wird häufig eine Intensitätsmodulation (IM) zusammen mit einer Direkterfassung (DD, Direct Detection) als Modulationsschema verwendet. Dabei wird die übertragene Wellenform auf eine augenblickliche optische Leistung moduliert, die durch eine Leuchtdiode (LED) oder Laserdiode ausgestrahlt wird. Auf der Empfängerseite wird die optische Leistung durch eine Fotodiode aufgenommen und direkt in einen äquivalenten elektrischen Strom gewandelt. Eine solche drahtlose optoelektronische IM/DD-Verbindung kann normalerweise nur auf eine inkohärente Weise arbeiten, da das übertragene Signal stets nicht negativ ist.

Der Erfindung liegt die Aufgabe zugrunde, einen verbesserten, insbesondere adaptiven optoelektronischen Sensor sowie ein verbessertes Verfahren der eingangs genannten Art zu schaffen. Dabei sollen insbesondere die Robustheit und Störsicherheit gegenüber einer Vielzahl unterschiedlicher Störquellen verbessert werden.

Bezüglich des optoelektronischen Sensors wird diese Aufgabe erfindungsgemäß gelöst durch Mittel, die so ausgestaltet sind, dass die vom Lichtsender ausgesandten Lichtsignale jeweils auf der Basis eines durch ein nach einem Frequenzspreizverfahren (Spread Spectrum) gespreizten und zur Erzeugung eines unipolaren Signals mit einem Offset beaufschlagten Ausgangssignals erzeugt werden, und Störungsunterdrückungsmittel, die so ausgestaltet sind, dass automatisch wiederholt oder kontinuierlich jeweils aktuelle Störungen gemessen, im Zeit- und/oder Frequenzbereich analysiert und in Abhängigkeit vom jeweiligen Ergebnis der Störungsanalysen kompensiert werden.

Aufgrund dieser Ausbildung wird die Robustheit und Störsicherheit des optoelektronischen Sensors gegenüber einer Vielzahl unterschiedlicher Störquellen deutlich verbessert. So ist es nunmehr nicht nur möglich, bipolare, d.h. die Werte "-1" und "+1" aufweisende Spreizsequenzen auf das unipolare optische Medium, dessen optische Leistung stets positiv ist, zu übertragen. Mit solchen bipolaren Spreizfrequenzen können die günstigen Korrelationseigenschaften von Spreizsequenzen auf den optischen

Sensor übertragen werden, um Störungen zu unterdrücken und/oder z.B. eine Unterscheidung von Signalen verschiedener Sensoren zu ermöglichen (Nutzertrennung). Es wird auch eine Art kognitiver Sensor geschaffen, der eine adaptive Störungsunterdrückung gewährleistet.

Dabei umfasst der Lichtsender bevorzugt Mittel zur Skalierung eines jeweiligen nach einem Frequenzspreizverfahren gespreizten und mit einem Offset beaufschlagten Ausgangssignals. Mit einer solchen Skalierung kann insbesondere erreicht werden, dass das jeweilige in den Überwachungsbereich ausgesandte Lichtsignal der mittleren optischen Sendeleistung der betreffenden Leuchtdiode des Lichtsenders entspricht.

Die Spreizsequenz kann insbesondere einen Pseudozufallscode umfassen.

Gemäß einer vorteilhaften praktischen Ausführungsform des erfindungsgemäßen optoelektronischen Sensors sind die vom Lichtsender ausgesandten Lichtsignale jeweils auf der Basis eines nach dem DSSS-(Direct Sequence Spread Spectrum)-Frequenzspreizverfahren mit einer bipolaren Spreizsequenz multiplizierten Ausgangssignals erzeugt.

Es ist somit also beispielsweise auch bei einem IM/DD-System der Einsatz bipolarer Frequenzspreizverfahren wie beispielsweise eines bipolaren DSSS-Frequenzspreizverfahrens mit kohärenter Detektion möglich. So kann beispielsweise eine bipolare Spreizsequenz durch Hinzuaddieren eines Gleichstromsignals in eine unipolare Sequenz gewandelt werden. Nach der Leistungsskalierung kann die resultierende Wellenform dann als optische Leistung (IM) ausgesandt werden. Auf der Empfangsseite kann das empfangene Signal durch die Fotodiode des Lichtempfängers direkt erfasst (DD) und dann beispielsweise hochfrequenzgefiltert (AC-Kopplung) werden. Eine AC-Kopplung ist jedoch nicht zwingend erforderlich. Das optional hochpassgefilterte Signal kann insbesondere einem Korrelator zugeführt werden, dessen Ausgangssignal dann mit einem vorgebbaren Grenzwert verglichen werden kann. In Abhängigkeit vom Grenzwert kann dann die betreffende Sequenz detektiert werden.

Einer solchen Frequenzbereichsformung (Frequency Domain Shaping, FDS) liegt die Annahme zugrunde, dass Spreizspektrum-Signale im Frequenzbereich im Vergleich zu schmalbandigen Störungen relativ flach und breit sind, d.h. im Frequenzbereich schmalbandige Störungen leicht durch eine Schwelle erfasst werden können. Die Adaptivität im Hinblick auf Störungen kann insbesondere durch die Formung robuster Spreizsequenzen erhalten werden, die an die Eigenschaften des Störsignals angepasst sind, d.h. dadurch, dass die Signalenergie in störungsfreie Bereiche des Spektrums positioniert wird. Mit der übertragenen Wellenform werden somit adaptiv Frequenzbereiche mit starker schmalbandiger Störung vermieden.

Der Lichtempfänger umfasst zweckmäßigerweise Mittel, um das Empfangssignal nach dessen Hochpassfilterung zu entspreizen. Dabei kann die Entspreizung insbesondere durch Multiplikation mit der jeweiligen Spreizsequenz erfolgen.

Gemäß einer bevorzugten praktischen Ausführungsform des erfindungsgemäßen optoelektronischen Sensors sind die Mittel zur adaptiven Störungsüberbrückung so ausgeführt, dass im Überwachungsbereich auftretende Störungen wiederholt, vorzugsweise periodisch gemessen, zur Analyse der Störungen im Frequenzbereich das Leistungsspektrum der gemessenen Störungen ermittelt und das Lichtsignal bzw. die Spreizsequenz so erzeugt werden, dass die Amplitudenantwort des erzeugten Lichtsignals im Frequenzbereich ein zum Leistungsspektrum der erfassten Störungen komplementäres Leistungsspektrum ergibt, indem die vom Leistungsspektrum der erfassten Störungen belegten Spektralbereiche ausgespart werden.

Dabei können die Mittel zur adaptiven Störungsunterdrückung insbesondere so ausgeführt sein, dass zur Analyse der Störungen im Frequenzbereich nur solche Signalamplituden berücksichtigt werden, die einen vorgebbaren Grenzwert überschreiten.

Bevorzugt ist das Lichtsignal so erzeugt, dass sich eine Phasenantwort des Lichtsignals im Frequenzbereich ergibt, die durch die Spreizsequenz definiert ist.

Dabei ist das Lichtsignal vorteilhafterweise so erzeugt, dass sich eine pseudozufällige Phasenantwort des Lichtsignals im Frequenzbereich ergibt, die einerseits die das zum Leistungsspektrum der erfassten Störungen komplementäre Leistungsspektrum aufweisende Amplitudenantwort und andererseits die durch die Spreizsequenz definierte Phasenantwort umfasst.

Um die Form der Störung in Erfahrung zu bringen, kann der erfindungsgemäße kognitive optoelektronische Sensor im vorliegenden Fall beispielsweise Vorabinformationen über die Umgebung mit heranziehen, die z.B. durch vorab erfolgende Messungen gewonnen werden können. Dazu können beispielsweise Mittel für eine wiederholte oder periodische Kanalabtastung vorgesehen sein, bei der die Störungsumgebung gemessen und analysiert wird.

Zunächst können die Messdaten der Umgebung beispielsweise durch einen Schnelle-Fourier-Transformations (FFT, Fast Fourier Transform)-Algorithmus in den Frequenzbereich transformiert werden, um das Leistungsspektrum der Störung abzuschätzen. Die signifikantesten Frequenzspitzen der schmalbandigen Störungssignale können dann beispielsweise durch einen Vergleich mit einer Schwelle erfasst werden. Auf der Basis dieser Analyse kann eine Amplitudenantwort mit einem komplementären Leistungsspektrum erzeugt werden, d.h. eine Amplitudenantwort, bei der die Signalenergie nur in störungsfreie Bereiche des Spektrums platziert wird. Diese Amplitudenantwort ist dann orthogonal oder unabhängig zur Amplitudenantwort der Störung, da sich die Leistungsspektren nicht überlappen. Danach kann der komplementären Amplitudenantwort eine bestimmte, insbesondere durch eine Pseudozufallssequenz definierte Phasenantwort zugeordnet werden. Das Signal kann insbesondere mit einem komplexen Phasenausdruck 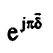 multipliziert werden, wobei 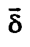 im einfachsten Fall beispielsweise eine binäre Pseudozufallssequenz wie beispielsweise eine m-Sequenz oder einen Gold-Code bezeichnen kann. Grundsätzlich können zur Aufteilung oder Verschlüsselung der Phase jedoch auch Sequenzen höherer Ordnung verwendet werden. Die resultierende Frequenzantwort kann dann beispielsweise durch eine Inverse Schnelle Fourier-Transformation (IFFT, Inverse Fast Fourier Transform) in den Zeitbereich rücktransformiert werden, wodurch eine rauschähnliche Sequenz erzeugt wird, die mit der aktuellen Störung unkorreliert ist.

Da für eine adaptive Wellenformung mit einem solchen FDS (Frequency Domain Shaping) die Kenntnis über den Kanal für den Sender wesentlich ist, ist eine solche Ausführung insbesondere für solche optoelektronische Sensoren geeignet, bei denen Sender und Empfänger nicht getrennt sind und ein Rückkanal zwischen Empfänger und Sender besteht, z.B. wenn Sender und Empfänger zusammen in einem Gehäuse untergebracht sind. Gemäß einer weiteren vorteilhaften Ausführungsform des erfindungsgemäßen optoelektronischen Sensors umfassen die Mittel zur adaptiven Störungsunterdrückung Abtastmittel zum bei der Chiprate der Spreizsequenz erfolgenden Abtasten des Empfangssignals, Mittel zum Transformieren des abgetasteten Signals in den Frequenzbereich, einen der Analyse der Störungen im Frequenzbereich dienenden Hüllkurvendetektor zum Erfassen von einen vorgebbaren Grenzwert überschreitenden Signalamplituden und Filtermittel, um im Frequenzbereich die den Grenzwert überschreitenden Amplituden zumindest abzuschwächen.

Dabei sind zweckmäßigerweise Mittel vorgesehen, um das durch die Filtermittel gefilterte Signal in den Zeitbereich zurückzutransformieren. Das Entspreizen des Empfangssignals erfolgt zweckmäßigerweise nach der Rücktransformation in den Zeitbereich.

Zur Störungsunterdrückung schmalbandiger Störungen kann also insbesondere auch eine Frequenzbereichsentzerrung (FDE, Frequency Domain Equalization) auf der Empfängerseite vorgesehen sein. Dabei erfolgt eine solche empfängerseitige, der Störungsunterdrückung dienende Frequenzbereichsentzerrung (FDE) zweckmäßigerweise vor dem Entspreizen.

Das Empfangssignal kann mit der Chiprate abgetastet und anschließend beispielsweise durch einen FFT-Algorithmus in den Frequenzbereich transformiert werden. Ausgehend wiederum von der Annahme, dass schmalbandige Störungen im Frequenzbereich leicht von Frequenzspreizsignalen unterscheidbar sind, nachdem insbesondere DSSS-Signale im Vergleich zu schmalbandigen Störungen, die im Frequenzbereich schmal sind und eine hohe Amplitude besitzen, breit und flach sind, wird das Störungssignal dann beispielsweise mittels eines Hüllkurvendetektors erfasst, indem beispielsweise Werte erfasst werden, die einen bestimmten Grenzwert überschreiten. An den Stellen, an denen die Störungsamplitude im Frequenzbereich einen bestimmten Grenzwert überschreitet, kann das Empfangssignal durch ein Störungsunterdrückungsfilter gedämpft werden. Dabei kann das Unterdrückungsfilter beispielsweise als eine Art Weißmacher (whitener) arbeiten, indem das Signal auf einen bestimmten Wert begrenzt wird, oder als Kerbfilter arbeiten, indem die Signalenergie an den betreffenden Frequenzstellen eliminiert wird. Danach kann das Signal beispielsweise durch einen IFFT-Algorithmus in den Zeitbereich rücktransformiert werden, woraufhin die Korrelation und die Detektion erfolgen können. Obwohl das Signal noch einer geringfügigen Störung unterworfen sein kann, wird die Bitfehlerrate deutlich reduziert, da die Auswirkungen der Störungen abgeschwächt werden.

Im Gegensatz zur Frequenzbereichsformung (FDS) findet die Frequenzbereichsentzerrung (FDE) nur im Bereich des Empfängers statt, wobei eine Vorausinformation über die Störungseigenschaften in diesem Fall nicht erforderlich ist. Die entsprechende Störungsunterdrückung basiert lediglich auf der Analyse des Empfangssignals und kann daher mit Vorteil insbesondere dort eingesetzt werden, wo der Lichtsender vom Lichtempfänger getrennt ist.

Gepulste Störungen stellen ein bekanntes Problem im Zusammenhang mit der Anwendung von Frequenzspreizverfahren dar. Gepulste Störungen können insbesondere durch einen anderen Benutzer hervorgerufen werden, der mit kleinem Tastverhältnis ohne Leistungssteuerung arbeitet.

Abhängig von der aktuellen Bandbreite des Störsignals können eine Anzahl von aufeinander folgenden Chips während der Übertragung beeinträchtigt werden. Entsprechend können solche beeinträchtigten Chips beim Empfänger ein beschädigtes Korrelationsausgangssignal mit sich bringen, was eine falsche Detektion zur Folge haben kann.

Insbesondere zur Vermeidung derartiger Probleme können die Mittel zur adaptiven Störungsunterdrückung gemäß einer weiteren bevorzugten Ausführungsform des optoelektronischen Sensors ein so genanntes Clipping-Filter umfassen.

Dabei ist ein solches Clipping-Filter vorzugsweise ausgeführt, um im Zeitbereich das Empfangssignal bei Überschreiten oder Unterschreiten eines vorgebbaren Referenzwertes auf einen vorgebbaren positiven bzw. negativen Wert zu setzen, das Empfangssignal bei Überschreiten oder Unterschreiten eines jeweiligen vorgebbaren positiven bzw. negativen Grenzwertes auf diesen Wert zu begrenzen oder das Empfangssignal bei Überschreiten oder Unterschreiten eines jeweiligen vorgebbaren positiven bzw. negativen Grenzwerts jeweils auf Null zu setzen.

Diese insbesondere zur Unterdrückung pulsförmiger Störungen geeignete Ausführung basiert auf der Annahme, dass gepulste Störungen im Zeitbereich im Vergleich zu zeitlich ausgedehnten Frequenzspreizsignalen relativ kurz sind. Mit dem Clipping-Filter können eingehende Signale im Zeitbereich vor der Korrelation und Detektion "abgeschnitten" (clip) werden, wenn sie einen bestimmten oder vorgebbaren Grenzwert überschreiten. Dabei sind insbesondere drei Arten von Antwortkurven denkbar: hart, sanft und durchschlagend (punch). Clipping-Filter mit einer harten Antwortkurve bewirken einfach eine harte Entscheidung, wobei das eingehende Signal beispielsweise auf einen positiven oder einen negativen Wert gesetzt wird. Clipping-Filter mit einer sanften Antwortkurve sind in einem bestimmten Dynamikbereich linear und liefern somit keine harte Entscheidung bezüglich des Signals. Bei Überschreiten oder Unterschreiten eines jeweiligen vorgebbaren positiven bzw. negativen Grenzwertes wird das Signal jedoch auf diesen Grenzwert begrenzt. Eine durchschlagende (punch) Antwortkurve ist mit der sanften Antwortkurve vergleichbar, soweit das Signal einen vorgebbaren Grenzwert nicht überschreitet. Wird der Grenzwert jedoch überschritten, so wird das Signal auf den Wert Null gesetzt. Indem beschädigte oder beeinträchtigte Teile des Signals auf den Wert Null gesetzt werden, sind diese Teile beim Korrelationsvorgang neutral, so dass nur die korrekten Signalteile berücksichtigt werden, wodurch die Wahrscheinlichkeit einer Fehldetektion auf ein Minimum reduziert wird.

Es wird somit ein kognitiver optoelektronischer Sensor angegeben, bei dem Frequenzspreiztechniken wie insbesondere das DSSS (Direct Sequence Spread Spectrum)-Verfahren angewandt werden und eine adaptive Störungsunterdrückung durch eine Zeit- und/oder Frequenz-Störungsanalyse mit adaptiver intelligenter Frequenzspreiz-Wellenformung und/oder einem insbesondere wieder adaptiven Störungsunterdrückungsfilter erreicht wird. Dabei kann die eingesetzte Frequenzspreiz-Technik, insbesondere DSSS-Technik, in besonderer Weise gleichzeitig auch zur adaptiven Störungsunterdrückung genutzt werden, die im Lichtsender und/oder im Lichtempfänger implementiert werden kann. Durch die entsprechenden adaptiven Sender- bzw. Empfängersysteme wird das Leistungsvermögen des Sensors deutlich erhöht.

Bevorzugt umfasst eine jeweilige Spreizsequenz eine binäre Pseudozufallssequenz.

Lichtsender und Lichtempfänger können auf einander gegenüberliegenden Seiten des Überwachungsbereichs angeordnet sein. Hierbei wird ein geeignetes Synchronisationsverfahren vorausgesetzt. Geeignete Verfahren finden sich im Spread Spectrum and CDMA: principles and applications, Valery P. Ipatov, Wiley Interscience 2005, ISBN 978-0-470-09180-7. Grundsätzlich ist es auch möglich, Lichtsender und Lichtempfänger auf einer Seite des Überwachungsbereichs und einen Retroreflektor auf der gegenüberliegenden Seite des Überwachungsbereichs anzuordnen. Die zweite Variante entspricht einer Autokollimationsanordnung.

Lichtsender und Lichtempfänger können beispielsweise auch in einer Lichtgitteranordnung vorgesehen sein. Dabei kann jeweils auch mehreren Lichtsendern ein gemeinsamer Lichtempfänger zugeordnet und entsprechend die Anzahl der Lichtempfänger geringer als die Anzahl der Lichtsender sein.

Der kognitive optoelektronische Sensor ist also insbesondere für eine adaptive Unterdrückung der Auswirkungen von Störungen ausgelegt. Dabei kann die Kenntnis der Form der aktuellen Störung mit einbezogen werden, die durch eine Analyse im Zeit- und/oder Frequenzbereich gewonnen werden kann. Da die Störungen im Zeit- oder Frequenzbereich nur relativ selten auftreten, können bestimmte Arten von Störungen leicht von Frequenzspreiz(FS)-Signalen unterschieden werden, da FrequenzspreizSignale ein hohes Zeit-Bandbreite-Produkt besitzen.

Das erfindungsgemäße Verfahren zeichnet sich entsprechend dadurch aus, dass die vom Lichtsender ausgesandten Lichtsignale jeweils auf der Basis eines durch ein nach einem Frequenzspreizverfahren (Spread Spectrum) gespreizten und zur Erzeugung eines unipolaren Signals mit einem Offset beaufschlagten Ausgangssignals erzeugt werden, dass die elektrischen Empfangssignale hochpassgefiltert werden können und dass zur Störungsunterdrückung wiederholt oder kontinuierlich jeweils aktuelle Störungen gemessen, im Zeit- und/oder Frequenzbereich analysiert und in Abhängigkeit vom jeweiligen Ergebnis der Störungsanalysen zumindest im Wesentlichen kompensiert werden.

Die Erfindung wird im Folgenden anhand von Ausführungsbeispielen unter Bezugnahme auf die Zeichnung näher erläutert; in dieser zeigen:
- Fig. 1: eine Prinzipdarstellung einer beispielhaften Signalmo- dulierung,
- Fig. 2: beispielhafte Frequenzspektren eines DSSS-Signals und eines Störsignals,
- Fig. 3: ein schematisches Blockdiagramm eines beispielhaften FDS (Frequency Domain Shaping)-Algorithmus,
- Fig. 4: ein schematisches Blockdiagramm eines beispielhaften FDE (Frequency Domain Equalization)-Algorithmus,
- Fig. 5: eine beispielhafte Darstellung eines Frequenzspreizsig- nals mit einem diesem überlagerten Störsignal und
- Fig. 6: eine schematische Darstellung eines beispielhaften Clipping-Filters.

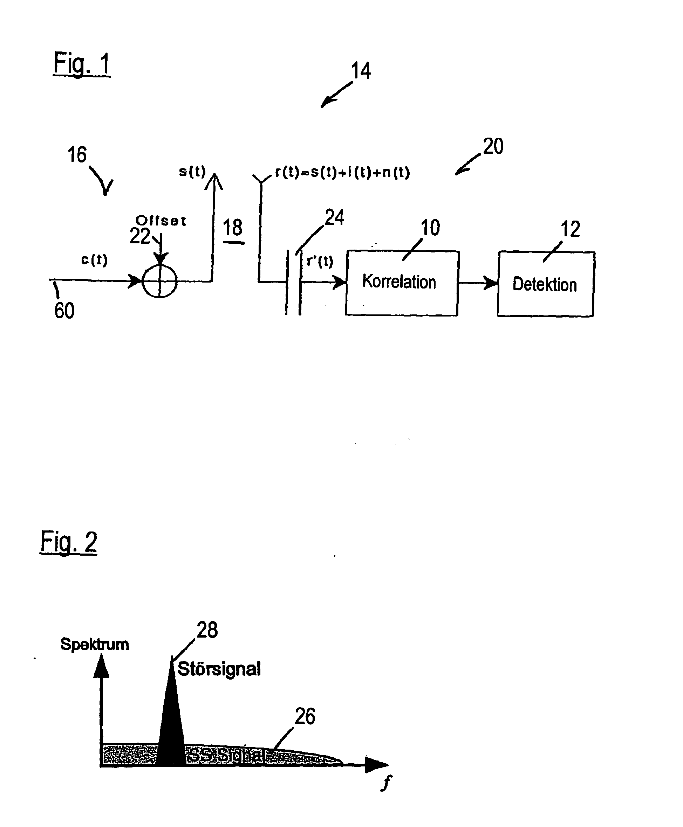

Fig. 1 zeigt eine Prinzipdarstellung einer beispielhaften Signalmodulierung.

Für optoelektronische Sensoren kann insbesondere eine Intensitätsmodulation (IM) zusammen mit einer Direkt-Detektion (DD, Direct Detection) als Modulationsschema verwendet werden. Dabei wird die übertragene Wellenform auf eine momentane optische Leistung moduliert, die durch eine Leuchtdiode (LED) oder Laserdiode des Lichtsenders ausgestrahlt wird. Auf der Empfängerseite wird die optische Leistung insbesondere durch eine Fotodiode (Empfänger) aufgenommen und direkt in einen äquivalenten elektrischen Strom umgewandelt.

Normalerweise kann eine optoelektronische drahtlose IM/DD-Verbindung nur auf eine inkohärente Weise arbeiten, da das übertragene Signal stets nicht negativ ist. Um dennoch bipolare Frequenzspreiztechniken und insbesondere eine bipolare DSSS-Technik einsetzen zu können, ist eine komplexere Ausführung des Senders und Empfängers erforderlich. Dazu zeigt die Fig. 1 eine beispielhafte Signalmodulierung.

Danach wird ein Ausgangssignal 60 zunächst insbesondere mit einer bipolaren Spreizfrequenz c(t) multipliziert. Daraufhin wird die bipolare Spreizsequenz c(t) durch Hinzuaddieren eines Gleichstromsignals (DC) oder Offsets in eine unipolare Sequenz transformiert. Nach einer zweckmäßigerweise vorgesehenen Leistungsskalierung wird die resultierende Wellenform s(t) als optische Leistung ausgesandt (IM).

Beim Empfänger wird das empfangene Lichtsignal r(t) = s(t) + i(t) + n(t) durch eine Fotodiode erfasst (DD) und dann optional hochpassgefiltert (AC-Kopplung), wobei i(t) das aktuelle Störsignal und n(t) (AWGN-Signal) das dem additiven weißen Gaußschen Rauschen entsprechende Signal darstellt. Das hochfrequenzgefilterte Signal r'(t) wird dann einem Korrelator 10 zugeführt, dessen Ausgangssignal mit einem vorgebbaren Grenzwert verglichen wird. In Abhängigkeit von dem Grenzwert wird dann die betreffende Sequenz in einem Detektor 12 detektiert.

Der betreffende optoelektronische Sensor 14 umfasst also wenigstens einen Lichtsender 16 zur Aussendung von Lichtsignalen s(t) in einen Überwachungsbereich 18 und wenigstens einen Lichtempfänger 20 zum Empfang von ausgesandten Lichtsignalen, wobei die empfangenen Lichtsignale einschließlich des aktuellen Störsignals i(t) und des einem additiven weißen Gaußschen Rauschen entsprechenden Signals n(t) insbesondere durch eine Fotodiode des Lichtempfängers 20 in elektrische Empfangssignale gewandelt werden.

Dabei sind die vom Lichtsender 16 ausgesandten Lichtsignale s(t) jeweils auf der Basis eines durch ein nach einem Frequenzspreizverfahren (Spread Spectrum) gespreizten und zur Erzeugung eines unipolaren Signals mit einem Offset 22 beaufschlagten Ausgangssignals 60 erzeugt. Die elektrischen Empfangssignale können mittels eines Hochpassfilters 24 gefiltert werden. Im Anschluss daran erfolgen mittels des Korrelators 12 und des Detektors 12 die Korrelation bzw. Detektion.

Der Lichtsender 16 kann, wie bereits erwähnt, Mittel zur Skalierung des jeweiligen nach einem Frequenzspreizverfahren gespreizten und mit dem Offset 22 beaufschlagten Ausgangssignals 60 umfassen.

Dabei können die vom Lichtsender 16 ausgesandten Lichtsignale s(t) insbesondere auf der Basis eines nach dem DSSS-(Direct Sequence Spread Spectrum)-Frequenzspreizverfahren mit einer bipolaren Spreizfrequenz c(t) multiplizierten Ausgangssignals 60 erzeugt sein.

Der Lichtempfänger 20 kann insbesondere Mittel umfassen, um das Empfangssignal nach dessen Hochpassfilterung zu entspreizen. Dabei kann die Entspreizung insbesondere durch Multiplikation mit der jeweiligen Spreizsequenz c(t) erfolgen.

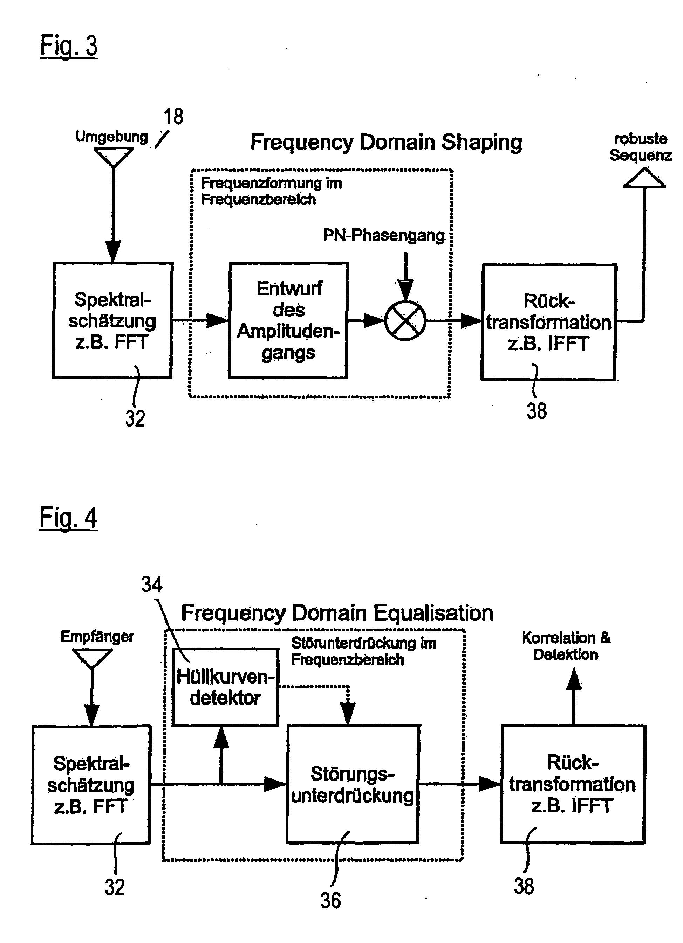

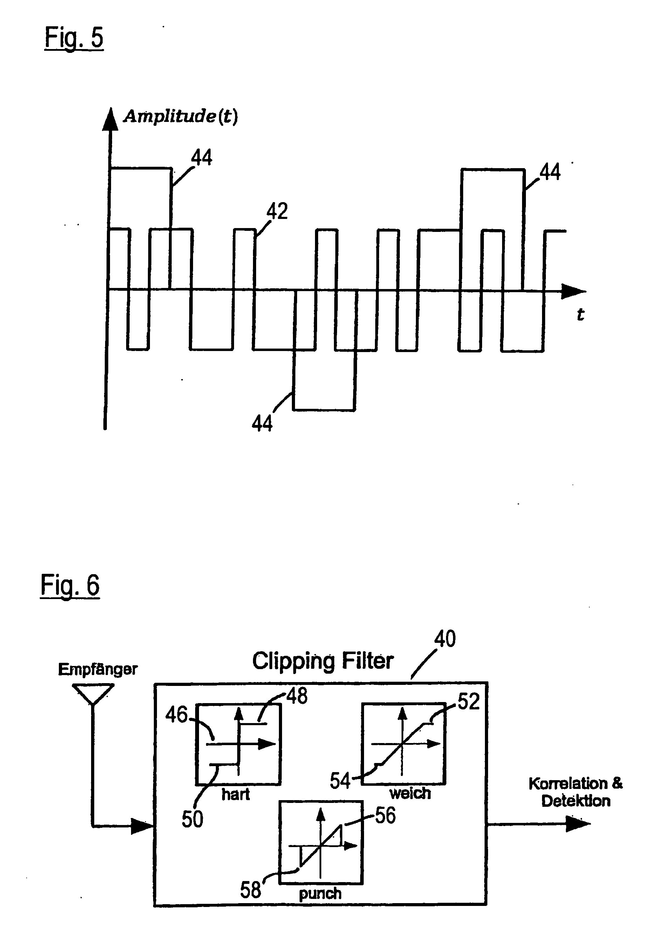

Der optoelektronische Sensor 14 umfasst zudem Mittel zur adaptiven Störungsunterdrückung, um automatisch wiederholt oder kontinuierlich jeweils aktuelle Störungen zu messen, im Zeit- und/oder Frequenzbereich zu analysieren und in Abhängigkeit vom jeweiligen Ergebnis der Störungsanalyse zumindest im Wesentlichen zu kompensieren. Dabei kann, wie eingangs bereits erwähnt, die adaptive Störungsunterdrückung insbesondere auf den folgenden Algorithmen basieren:
- Frequenzbereichsformung (FDS, Frequency Domain Shaping, vgl. Fig. 2 und 3)
- Frequenzbereichsentzerrung (FDE, Frequency Domain Equalization, vgl. Fig. 4)
- Clipping-Filter (CF, vgl. Fig. 5 und 6).

Wie sich aus den Fig. 2 und 3 ergibt, können die Mittel zur adaptiven Störungsunterdrückung insbesondere so ausgeführt sein, dass im Überwachungsbereich 18 auftretende Störungen wiederholt, vorzugsweise periodisch gemessen, zur Analyse der Störungen im Frequenzbereich das Leistungsspektrum der gemessenen Störungen ermittelt und das Lichtsignal s(t) bzw. die Spreizsequenz c(t) so erzeugt werden, dass die Amplitudenantwort des erzeugten Lichtsignals s(t) im Frequenzbereich ein zum Leistungsspektrum der erfassten Störung komplementäres Leistungsspektrum ergibt, indem die vom Leistungsspektrum der erfassten Störungen belegten Spektralbereiche ausgespart werden. Dabei können die Mittel zur adaptiven Störungsunterdrückung insbesondere so ausgeführt sein, dass zur Analyse der Störungen im Frequenzbereich nur solche Signalamplituden berücksichtigt werden, die einen vorgebbaren Grenzwert überschreiten. Das Lichtsignal kann insbesondere so erzeugt sein, dass sich eine Phasenantwort des Lichtsignals im Frequenzbereich ergibt, die durch die Spreizsequenz c(t) definiert ist. Dabei ist das Lichtsignal s(t) insbesondere so erzeugt, dass sich eine pseudozufällige Phasenantwort des Lichtsignals im Frequenzbereich ergibt, die einerseits die das zum Leistungsspektrum der erfassten Störungen komplementäre Leistungsspektrum aufweisende Amplitudenantwort und andererseits die durch die Spreizsequenz definierte Phasenantwort umfasst.

Das hier in Betracht gezogene FDS (Frequency Domain Shaping) beruht auf der Annahme, dass Frequenzspreizsignale im Frequenzbereich im Vergleich zu einer schmalbandigen Störung flacher und breiter sind, d.h. im Frequenzbereich eine schmalbandige Störung leicht über den Vergleich mit einem Grenzwert erfasst werden kann, wie dies Fig. 2 entnommen werden kann, in der beispielhafte Frequenzspektren eines DSSS-Signals 26 und eines Störsignals 28 gezeigt sind.

Die Adaptivität gegenüber Störungen wird durch Formung robuster Spreizsequenzen c(t) erhalten, die an die Eigenschaften des Störsignals angepasst sind, d.h. die Signalenergie wird in störungsfreien Bereichen des Spektrums positioniert. Mit der Übertragung einer entsprechenden Wellenform werden adaptiv Frequenzbereiche mit starker schmalbandiger Störung vermieden.

In Fig. 2 sind die Spektren des DSSS-Signals 26 und des Störsignals 28 wiedergegeben.

Um Kenntnis von der Form der Störung zu erlangen, benötigt der kognitive optoelektronische Sensor 14 (vgl. auch Fig. 1) im vorliegenden Fall Vorabinformationen über die Umgebung wie z.B. den Überwachungsbereich 18, die durch Vorabmessungen erhältlich ist. Demzufolge umfasst der FDS (Frequency Domain Shaping)-Sensor beispielsweise Mittel für eine periodische Abschätzung der Kanaleigenschaften, wobei während der betreffenden Perioden die störungsbehaftete Umgebung gemessen und analysiert wird.

Fig. 3 zeigt ein schematisches Blockdiagramm eines beispielhaften FDS-(Frequency Domain Shaping)-Algorithmus. Wie sich aus der Fig. 3 ergibt, werden zunächst die Messdaten der Umgebung, hier z.B. des Überwachungsbereiches 18, beispielsweise mittels eines FFT-Algorithmus 32 in den Frequenzbereich transformiert, um das Leistungsspektrum der Störung abzuschätzen. Die signifikantesten Frequenzspitzen der schmalbandigen Störsignale werden dann durch Vergleich mit einem Grenz- oder Schwellwert erfasst. Basierend auf dieser Analyse wird eine Amplitudenantwort mit einem komplementären Leistungsspektrum erzeugt, d.h. die Signalenergie in den störungsfreien Bereichen des Spektrums platziert. Diese Amplitudenantwort ist dann orthogonal oder unabhängig von der Amplitudenantwort der Störung, da sich die Leistungsspektren nicht überlappen. Danach wird der komplementären Amplitudenantwort eine besondere Phasenantwort zugeordnet, die beispielsweise durch eine Pseudozufallssequenz bestimmt sein kann. Dazu wird das Signal bevorzugt mit einem komplexen, pseudozufälligen Phasenausdruck 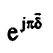 multipliziert, wobei 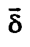 im einfachsten Fall eine binäre Pseudozufallssequenz wie beispielsweise eine n-Sequenz, einen Gold-Code, usw., umfassen kann. Grundsätzlich können zur Aufteilung bzw. Codierung der Phase auch Sequenzen höherer Ordnung eingesetzt werden. Die resultierende Frequenzantwort wird dann beispielsweise mittels eines IFFT-Algorithmus 38 in den Zeitbereich rücktransformiert, wodurch eine rauschartige Sequenz erzeugt wird, die mit der aktuellen Störung unkorreliert ist.

Da im vorliegenden Fall im Lichtsender 16 (vgl. auch wieder Fig. 1) Wissen über den Kanal präsent ist, was für die adaptive FDS-Wellenformung wesentlich ist, ist eine solche Ausführung besonders dann geeignet, wenn Lichtsender 16 und Lichtempfänger 20 auf der gleichen Seite des Überwachungsbereichs 18 oder nahe beieinander angeordnet sind. Es wird ein Rückkanal vom Empfänger zum Sender benötigt. Dieser ist z.B. besonders einfach dann gegeben, wenn Sender und Empfänger auf einer Platine in demselben Gehäuse arbeiten wie z.B. bei Reflexionslichtschranken.

Die Mittel zur adaptiven Störungsunterdrückung können insbesondere auch Abtastmittel zum bei der Chiprate der Spreizsequenz c(t) erfolgenden Abtasten des Empfangssignals, Mittel 32 zur Spektralabschätzung, beispielsweise Transformieren des abgetasteten Signals in den Frequenzbereich, einen der Analyse der Störungen im Frequenzbereich dienenden Hüllkurvendetektor 34 zum Erfassen von einen vorgebbaren Grenzwert überschreitenden Signalamplituden und Filtermittel 36 umfassen, um im Frequenzbereich die den Grenzwert überschreitenden Amplituden zumindest abzuschwächen (vgl. Fig. 4).

Zudem können z.B. einen IFFT-Algorithmus umfassende Mittel 38 vorgesehen sein, um das durch die Filtermittel 36 gefilterte Signal in den Zeitbereich zurückzutransformieren.

Das Entspreizen des Empfangssignals kann nach der Rücktransformation in den Zeitbereich erfolgen.

Fig. 4 zeigt ein schematisches Blockdiagramm eines entsprechenden beispielhaften FDE (Frequency Domain Equalization)-Algorithmus.

Danach wird, wie bereits erwähnt, das empfangene Signal bei der Chiprate abgetastet und durch die Transformationsmittel 32 bzw. einen FFT-Algorithmus in den Frequenzbereich transformiert. Wiederum gestützt auf die Annahme, dass eine schmalbandige Störung im Frequenzbereich leicht von frequenzgespreizten (SS) Signalen unterschieden werden kann, wird das Störsignal dann mittels des Hüllkurvendetektors 34 erfasst, wobei einen bestimmten oder vorgebbaren Grenzwert überschreitende Werte erfasst werden. An den Frequenzstellen, an denen die Amplitude des Störsignals einen bestimmten oder vorgebbaren Grenzwert überschreitet, wird das empfangene Signal durch ein Störungsunterdrückungsfilter 36 zumindest gedämpft. Dabei kann das zur Störungsunterdrückung vorgesehene Filter 36 entweder im Sinne eines "Weißmachers" (whitener) arbeiten, indem das Signal auf einen bestimmten Wert begrenzt wird, oder als Kerbfilter vorgesehen sein, um die Signalenergie an den betreffenden Frequenzstellen zu eliminieren.

Danach wird das Signal durch die Rücktransformationsmittel 38, z.B. einen IFFT-Algorithmus, in den Zeitbereich rücktransformiert, worauf die Korrelation und der Detektionsvorgang erfolgen.

Obwohl das Signal einer leichten Verzerrung unterliegen kann, wird die Bitfehlerrate deutlich reduziert, da Störungseinflüsse zumindest abgeschwächt werden.

Anders als die Frequenzbereichsformung (FDS) findet die Frequenzbereichsentzerrung (FDE) nur beim Lichtempfänger 20 statt, wobei im vorliegenden Fall keine Vorabinformation über die Störungseigenschaften erforderlich ist. Die Störungsunterdrückung basiert hier nur auf der Analyse des empfangenen Signals und kann daher mit Vorteil insbesondere bei solchen optoelektronischen Sensoren zum Einsatz kommen, bei denen der Lichtempfänger 20 vom Lichtsender 16 getrennt ist.

Wie sich insbesondere aus den Fig. 5 und 6 ergibt, können die Mittel zur adaptiven Störungsunterdrückung insbesondere auch ein Clipping-Filter 40 umfassen.

Dabei kann ein solches Clipping-Filter insbesondere ausgeführt sein, um im Zeitbereich das Empfangssignal bei Überschreiten oder Unterschreiten eines vorgebbaren Referenzwertes auf einen vorgebbaren positiven bzw. negativen Wert zu setzen (harte Antwortkurve), das Empfangssignal beim Überschreiten oder Unterschreiten eines jeweiligen vorgebbaren positiven bzw. negativen Grenzwertes auf diesen Grenzwert zu begrenzen (weiche Antwortkurve) oder das Empfangssignal bei Überschreiten oder Unterschreiten eines jeweiligen vorgebbaren positiven bzw. negativen Grenzwertes jeweils auf Null zu setzen (durchgreifende Antwortkurve). Das Entspreizen des Empfangssignals kann nach einer solchen Clipping-Filterung erfolgen.

Fig. 5 zeigt eine beispielhafte Darstellung eines Frequenzspreiz-(SS)-Signals 42 mit einem diesem überlagerten Störsignal 44.

Eine gepulste Störung stellt im Bereich der SS-Technik ein bekanntes Problem dar. Eine solche gepulste Störung kann durch einen anderen Benutzer verursacht sein, der mit kleinem Tastverhältnis ohne Leistungssteuerung arbeitet.

Je nach aktueller Bandbreite des Störsignals kann eine bestimmte Anzahl von aufeinander folgenden Chips während der Übertragung beeinträchtigt werden. Am bzw. im Empfänger können diese beeinträchtigten Chips folglich ein beschädigtes Korrelations-Ausgangssignal mit sich bringen, was eine Fehldetektion zur Folge haben kann.

Solche gepulste Störungen können auf der Empfängerseite beispielsweise durch ein Clipping-Filter 40 unterdrückt werden, wie es in der Fig. 6 beispielhaft dargestellt ist. Die betreffenden, d.h. insbesondere ein solches Clipping-Filter 40 umfassenden Mittel zur adaptiven Störungsunterdrückung unterscheiden sich von Algorithmen zur Auslöschung schmalbandiger Störungen beispielsweise dadurch, dass sie auf der Annahme basieren, dass gepulste Störungen im Zeitbereich im Vergleich zu Frequenzspreizsignalen relativ kurz sind, wie dies beispielsweise in Fig. 5 angedeutet ist.

Fig. 6 zeigt in schematischer Darstellung ein beispielhaftes Clipping-Filter 40, wobei beispielsweise drei unterschiedliche Varianten wiedergegeben sind.

Mittels eines solchen Clipping-Filters 40 kann das eingehende Signal im Zeitbereich vor der Korrelation und Detektion z.B. beschnitten werden (clipping), wenn ein bestimmter oder vorgebbarer Grenzwert überschritten wird. Dabei sind beispielsweise die drei folgenden Arten von Antwortkurven möglich: hart, weich und durchgreifend (punch).

Dabei bewirken Clipping-Filter mit einer harten Antwortkurve einfach eine harte Entscheidung. Bei Überschreiten oder Unterschreiten eines vorgebbaren Referenzwertes wird das Empfangssignal auf einen vorgebbaren positiven 48 bzw. negativen Wert 50 gesetzt.

Dagegen sind Clipping-Filter mit einer weichen Antwortkurve in einem bestimmten Dynamikbereich linear, so dass bezüglich des Signals keine harte Entscheidung getroffen wird. Bei Überschreiten oder Unterschreiten eines jeweiligen vorgebbaren positiven 52 bzw. negativen Grenzwertes 54 wird das Empfangssignal jedoch auf diesen Grenzwert 52 bzw. 54 begrenzt.

Bei Clipping-Filtern mit einer durchgreifenden (punch) Antwortkurve wird das Empfangssignal bei Überschreiten oder Unterschreiten eines jeweiligen vorgebbaren positiven 56 bzw. negativen Grenzwertes 58 jeweils auf Null gesetzt. Werden diese Grenzwerte nicht über- bzw. unterschritten, so wird der jeweilige ursprüngliche Wert des Empfangssignals ähnlich wie bei der weichen Antwortkurve vorzugsweise beibehalten. Indem beschädigte oder beeinträchtigte Signalteile auf Null gesetzt werden, wird diesen Teilen bei der Ausführung der Korrelation ein neutraler Charakter zugeordnet. Entsprechend werden nur die korrekten Signalteile berücksichtigt, wodurch die Wahrscheinlichkeit einer Fehldetektion auf ein Minimum reduziert wird.

Die Mittel zur adaptiven Störungsunterdrückung sowie die verschiedenen Algorithmen, Filter usw. können insbesondere in einer entsprechenden, vorzugsweise elektronischen Steuer- und/oder Auswerteeinrichtung verwirklicht sein, wobei diese entsprechend ausgeführte Steuer- und/oder Auswerteeinrichtung teilweise oder zumindest im Wesentlichen vollständig insbesondere dem Lichtsender und/oder Lichtempfänger zugeordnet bzw. in diesem integriert sein kann.

### Bezugszeichenliste

- 10: Korrelator
- 12: Detektor
- 14: optoelektronischer Sensor
- 16: Lichtsender
- 18: Überwachungsbereich
- 20: Lichtempfänger
- 22: Offset
- 24: Hochpassfilter
- 26: DSSS-Signal
- 28: Störsignal
- 32: Transformationsalgorithmus
- 34: Hüllkurvendetektor
- 36: Störungsunterdrückungsfilter
- 38: Transformationsalgorithmus
- 40: Clipping-Filter
- 42: SS-Signal
- 44: Störsignal
- 46: Referenzwert
- 48: positiver Wert
- 50: negativer Wert
- 52: positiver Wert
- 54: negativer Wert
- 56: positiver Wert
- 58: negativer Wert
- 60: Ausgangssignal
- c(t): Spreizsequenz
- r(t): empfangene Lichtsignale
- s(t): Lichtsignal

## Patentansprüche

1. Optoelektronischer Sensor (14) mit wenigstens einem Lichtsender (16) zur Aussendung von Lichtsignalen (s(t)) in einen Überwachungsbereich (18) und wenigstens einem Lichtempfänger (20) zum Empfang von Lichtsignalen, wobei die empfangenen Lichtsignale (r(t)) im Lichtempfänger in elektrische Empfangssignale gewandelt werden,
**gekennzeichnet durch**
Mittel, die so ausgestaltet sind, dass die vom Lichtsender (16) ausgesandten Lichtsignale (s(t)) jeweils auf der Basis eines **durch** ein nach einem Frequenzspreizverfahren gespreizten und zur Erzeugung eines unipolaren Signals mit einem Offset (22) beaufschlagten Ausgangssignals (60) erzeugt werden und Störungsunterdrückungsmittel, die so ausgestaltet sind, dass automatisch wiederholt oder kontinuierlich jeweils aktuelle Störungen gemessen, im Zeit- und/oder Frequenzbereich analysiert und in Abhängigkeit vom jeweiligen Ergebnis der Störungsanalysen kompensiert werden.

2. Optoelektronischer Sensor nach Anspruch 1,
**dadurch gekennzeichnet,**
**dass** der Lichtsender (16) Mittel zur Skalierung eines jeweiligen nach einem Frequenzspreizverfahren gespreizten und mit einem Offset beaufschlagten Ausgangssignals (60) umfasst.

3. Optoelektronischer Sensor nach Anspruch 1 oder 2,
**dadurch gekennzeichnet,**
**dass** die Spreizsequenz eine Pseudozufallssequenz umfasst und/oder dass die vom Lichtsender (16) ausgesandten Lichtsignale (s(t)) jeweils auf der Basis eines nach dem DSSS-Frequenzspreizverfahren mit einer bipolaren Spreizsequenz (c(t)) multiplizierten Ausgangssignals (60) erzeugt sind.

4. Optoelektronischer Sensor nach einem der vorhergehenden Ansprüche,
**dadurch gekennzeichnet,**
**dass** der Lichtempfänger (20) Mittel umfasst, um das Empfangssignal zu entspreizen, wobei die Entspreizung vorzugsweise durch Multiplikation mit der jeweiligen Spreizsequenz (c(t)) erfolgt.

5. Optoelektronischer Sensor nach einem der vorhergehenden Ansprüche,
**dadurch gekennzeichnet,**
**dass** die Mittel zur adaptiven Störungsunterdrückung so ausgeführt sind, dass im Überwachungsbereich (18) auftretende Störungen wiederholt, vorzugsweise periodisch gemessen, zur Analyse der Störungen im Frequenzbereich das Leistungsspektrum der gemessenen Störungen ermittelt und das Lichtsignal (s(t)) bzw. die Spreizsequenz so erzeugt werden, dass die Amplitudenantwort des erzeugten Lichtsignals (s(t)) im Frequenzbereich ein zum Leistungsspektrum der erfassten Störungen komplementäres Leistungsspektrum ergibt, indem die vom Leistungsspektrum der erfassten Störungen belegten Spektralbereiche ausgespart werden.

6. Optoelektronischer Sensor nach Anspruch 5,
**dadurch gekennzeichnet,**
**dass** die Mittel zur adaptiven Störungsunterdrückung so ausgeführt sind, dass zur Analyse der Störungen im Frequenzbereich nur solche Signalamplituden berücksichtigt werden, die einen vorgebbaren Grenzwert überschreiten.

7. Optoelektronischer Sensor nach einem der Ansprüche 3 bis 6,
**dadurch gekennzeichnet,**
**dass** das Lichtsignal (s(t)) so erzeugt ist, dass sich eine Phasenantwort des Lichtsignals (s(t)) im Frequenzbereich ergibt, die durch die Spreizsequenz definiert ist.

8. Optoelektronischer Sensor nach Anspruch 7,
**dadurch gekennzeichnet,**
**dass** das Lichtsignal (s(t)) so erzeugt ist, dass sich eine pseudozufällige Phasenantwort des Lichtsignals (s(t)) im Frequenzbereich ergibt, die einerseits die das zum Leistungsspektrum der erfassten Störungen komplementäre Leistungsspektrum aufweisende Amplitudenantwort und andererseits die durch die Spreizsequenz definierte Phasenantwort umfasst.

9. Optoelektronischer Sensor nach einem der vorhergehenden Ansprüche,
**dadurch gekennzeichnet,**
**dass** die Mittel zur adaptiven Störungsunterdrückung Abtastmittel zum bei der Chiprate der Spreizsequenz erfolgenden Abtasten des Empfangssignals, Mittel (32) zum Transformieren des abgetasteten Signals in den Frequenzbereich, einen der Analyse der Störungen im Frequenzbereich dienenden Hüllkurvendetektor (34) zum Erfassen von einen vorgebbaren Grenzwert überschreiten Signalamplituden und Filtermittel (36) umfassen, um im Frequenzbereich die den Grenzwert überschreitenden Amplituden zumindest abzuschwächen.

10. Optoelektronischer Sensor nach Anspruch 9,
**dadurch gekennzeichnet,**
**dass** Mittel (38) vorgesehen sind, um das durch die Filtermittel (36) gefilterte Signal in den Zeitbereich zurückzutransformieren.

11. Optoelektronischer Sensor nach Anspruch 10,
**dadurch gekennzeichnet,**
**dass** das Entspreizen des Empfangssignals nach der Rücktransformation in den Zeitbereich erfolgt.

12. Optoelektronischer Sensor nach einem der vorhergehenden Ansprüche,
**dadurch gekennzeichnet,**
**dass** die Mittel zur adaptiven Störungsunterdrückung ein Clipping-Filter (40) umfassen.

13. Optoelektronischer Sensor nach Anspruch 12,
**dadurch gekennzeichnet,**
**dass** das Clipping-Filter (40) ausgeführt ist, um im Zeitbereich das Empfangssignal bei Überschreiten oder Unterschreiten eines vorgebbaren Referenzwertes (46) auf einen vorgebbaren positiven (48) bzw. negativen Wert (50) zu setzen, das Empfangssignal bei Überschreiten oder Unterschreiten eines jeweiligen vorgebbaren positiven (52) bzw. negativen Grenzwertes (54) auf diesen Grenzwert (52 bzw. 54) zu begrenzen oder das Empfangssignal bei Überschreiten oder Unterschreiten einen jeweiligen vorgebbaren positiven (56) bzw. negativen Grenzwertes (58) jeweils auf Null zu setzen.

14. Optoelektronischer Sensor nach Anspruch 12 oder 13,
**dadurch gekennzeichnet,**
**dass** das Entspreizen des Empfangssignals nach der Clipping-Filterung erfolgt.

15. Verfahren zur Störungsunterdrückung bei einem optoelektronischen Sensor (14) mit wenigstens einem Lichtsender (16) zur Aussendung von Lichtsignalen (s(t)) in einen Überwachungsbereich (18) und wenigstens einem Lichtempfänger (20) zum Empfang von Lichtsignalen, bei dem die empfangenen Lichtsignale (r(t)) im Lichtempfänger in elektrische Empfangssignale gewandelt werden,
**dadurch gekennzeichnet,**
**dass** die vom Lichtsender (16) ausgesandten Lichtsignale (s(t)) jeweils auf der Basis eines durch ein nach einem Frequenzspreizverfahren gespreizten und zur Erzeugung eines unipolaren Signals mit einem Offset (22) beaufschlagten Ausgangssignals (60) erzeugt werden und dass zur Störungsunterdrückung wiederholt oder kontinuierlich jeweils aktuelle Störungen gemessen, im Zeit- und/oder Frequenzbereich analysiert und in Abhängigkeit vom jeweiligen Ergebnis der Störungsanalysen kompensiert werden.

## Claims

1. An optoelectronic sensor (14) having at least one light transmitter (16) for the transmission of light signals (s(t)) into a monitored zone (18) and having at least one light receiver (20) for the reception of light signals, wherein the received light signals (r(t)) are converted into electrical received signals in the light receiver,
**characterized by**
means which are designed so that the light signals (s(t)) transmitted by the light transmitter (16) are each generated on the basis of an output signal (60) spread in accordance with a frequency spreading technique (spread spectrum) and having an offset (22) applied for the generation of a unipolar signal; and by interference suppression means which are designed so that respective current interference is automatically measured repeatedly or continuously, is analyzed in the time domain and/or the frequency domain, and is compensated in dependence on the respective result of the interference analysis.

2. An optoelectronic sensor in accordance with claim 1, **characterized in that** the light transmitter (16) includes means for the scaling of a respective output signal (60) spread in accordance with a frequency spreading technique and having an offset applied.

3. An optoelectronic sensor in accordance with claim 1 or claim 2, **characterized in that** the spread sequence includes a pseudorandom sequence; and/or **in that** the lights signals (s(t)) transmitted by the light transmitter (16) are each generated on the basis of an output signal (60) in accordance with the DSSS frequency spreading technique multiplied by a bipolar spread sequence (c(t)).

4. An optoelectronic sensor in accordance with any one of the preceding claims, **characterized in that** the light receiver (20) includes means to despread the received signal, with the despreading preferably taking place by multiplication by the respective spread sequence (c(t)).

5. An optoelectronic sensor in accordance with any one of the preceding claims, **characterized in that** the means for adaptive interference suppression are designed so that interference occurring in the monitored zone (18) is measured repeatedly, preferably periodically; the power spectrum of the measured interference is determined for the analysis of the interference in the frequency domain; and the light signal (s(t)) or the spread sequence are generated so that the amplitude response of the generated light signal (s(t)) in the frequency domain produces a power spectrum complementary to the power spectrum of the detected interference in that the spectral regions covered by the power spectrum of the detected interference are left out.

6. An optoelectronic sensor in accordance with claim 5, **characterized in that** the means for adaptive interference suppression are designed so that only those signal amplitudes are considered for the analysis of the interference in the frequency domain which exceed a presettable limit value.

7. An optoelectronic sensor in accordance with any one of the claims 3 to 6, **characterized in that** the light signal (s(t)) is generated so that a
phase response of the light signal (s(t)) is produced in the frequency domain which is defined by the spread sequence.

8. An optoelectronic sensor in accordance with claim 7, **characterized in that** the light signal (s(t)) is produced so that a pseudorandom phase response of the light signal (s(t)) is produced in the frequency domain which includes the amplitude response having the power spectrum complementary to the power spectrum of the detected interference, on the one hand, and the phase response defined by the spread sequence, on the other hand.

9. An optoelectronic sensor in accordance with any one of the preceding claims, **characterized in that** the means for adaptive interference suppression include sampling means for the sampling of the received signal taking place at the chip rate of the spread sequence; means (32) for the transforming of the sampled signal into the frequency domain; an envelope detector (34) serving for the analysis of the interference in the frequency domain and for the detection of signal amplitudes exceeding a presettable limit value; and filter means (36) to at least attenuate the amplitudes exceeding the limit value in the frequency domain.

10. An optoelectronic sensor in accordance with claim 9, **characterized in that** means (38) are provided to back transform the signal filtered by the filter means (36) into the time domain.

11. An optoelectronic sensor in accordance with claim 10, **characterized in that** the despreading of the received signal takes place after the back transformation into the time domain.

12. An optoelectronic sensor in accordance with any one of the preceding claims, **characterized in that** the means for adaptive interference suppression include a clipping filter (40).

13. An optoelectronic sensor in accordance with claim 12, **characterized in that** the clipping filter (40) is designed to set the received signal in the time domain to a presettable positive value (48) or negative (50) value on the exceeding or falling below of a presettable reference value (46); on the exceeding or falling below of a respective presettable positive limit value (52) or negative limit value (54), to limit the received signal to this limit value (52 or 54 respectively); or to set the received signal to zero in each case on the exceeding or falling below of a respective presettable positive limit value (56) or negative limit value (58).

14. An optoelectronic sensor in accordance with claim 12 or claim 13, **characterized in that** the despreading of the received signal takes place after the clipping filtering.

15. A method for interference suppression with an optoelectronic sensor (14) having at least one light transmitter (16) for the transmission of light signals (s(t)) into a monitored zone (18) and having at least one light receiver (20) for the reception of light signals in which the received light signals (r(t)) are converted into electrical received signals in the light receiver,
**characterized in that**
the light signals (s(t)) transmitted by the light transmitter (16) are each generated on the basis of an output signal (60) spread in accordance with a frequency spreading technique (spread spectrum) and having an offset (22) applied for the generation of a unipolar signal; and **in that** respective current interference is measured repeatedly or continuously, is analyzed in the time domain and/or frequency domain; and is compensated in dependence on the respective result of the interference analyses.

## Revendications

1. Capteur optoélectronique (14) comprenant au moins un émetteur de lumière (16) pour émettre des signaux lumineux (s(t)) dans une zone de surveillance (18) et au moins un récepteur de lumière (20) pour recevoir des signaux lumineux, les signaux lumineux reçus (r(t)) étant convertis dans le récepteur de lumière en signaux de réception électrique,
**caractérisé par**
des moyens qui sont conçus de telle manière que les signaux lumineux émis (s(t)) par l'émetteur de lumière (16) sont générés respectivement sur la base d'un signal de départ (60) étalé selon un procédé d'étalement en fréquence et affectés d'un offset (22) pour engendrer un signal unipolaire, et par des moyens de suppression de perturbations qui sont conçus de telle manière que des perturbations actuelles respectives sont automatiquement mesurées de façon répétée ou en continu, analysées dans une plage temporelle et/ou dans une plage de fréquences, et compensées en fonction du résultat respectif des analyses de perturbations.

2. Capteur optoélectronique selon la revendication 1,
**caractérisé en ce que** l'émetteur de lumière (16) comprend des moyens pour mettre à l'échelle un signal de départ (60) respectivement étalé selon un procédé d'étalement en fréquence et affecté d'un offset.

3. Capteur optoélectronique selon la revendication 1 ou 2,
**caractérisé en ce que** la séquence d'étalement comprend une séquence pseudoaléatoire et/ou **en ce que** les signaux lumineux (s(t)) émis par l'émetteur de lumière (16) sont respectivement engendrés à la base d'un signal de départ (60) multiplié avec une séquence d'étalement bipolaire (c(t)) d'après le procédé d'étalement en fréquence DSSS.

4. Capteur optoélectronique selon l'une des revendications précédentes,
**caractérisé en ce que** le récepteur de lumière (20) comprend des moyens pour désétaler le signal de réception, et le désétalement a de préférence lieu par multiplication avec la séquence d'étalement respective (c(t)).

5. Capteur optoélectronique selon l'une des revendications précédentes,
**caractérisé en ce que** les moyens pour la suppression adaptative des perturbations sont réalisés de telle façon que des perturbations qui se produisent dans la zone de surveillance (18) sont mesurées de façon répétée, de préférence périodiquement, le spectre de puissance des perturbations mesurées est déterminé pour l'analyse des perturbations dans la plage de fréquences, et le signal lumineux (s(t)), ou respectivement la séquence d'étalement, sont générés de telle façon que la réponse en amplitude du signal lumineux généré (s(t)) dans la plage de fréquences donne en résultat un spectre de puissance complémentaire du spectre de puissance des perturbations détectées, **en ce que** les plages spectrales occupées par le spectre de puissance des perturbations détectées sont exclues.

6. Capteur optoélectronique selon la revendication 5,
**caractérisé en ce que** les moyens pour la suppression adaptative des perturbations sont réalisés de telle façon que, pour l'analyse des perturbations dans la plage de fréquences, seules les amplitudes de signaux qui dépassent une valeur seuil prédéterminée sont pris en compte.

7. Capteur optoélectronique selon l'une des revendications 3 à 6,
**caractérisé en ce que** le signal lumineux (s(t)) est engendré de telle façon qu'il en résulte une réponse en phase du signal lumineux (s(t)) dans la plage de fréquence qui est définie par la séquence d'étalement.

8. Capteur optoélectronique selon la revendication 7,
**caractérisé en ce que** le signal lumineux (s(t)) est engendré de telle façon qu'il en résulte une réponse en phase le pseudoaléatoire du signal lumineux (s(t)) dans la plage de fréquences, qui inclut d'une part la réponse en amplitude comportant le spectre de puissance complémentaire au spectre de puissance des perturbations détectées, et d'autre part la réponse en phase définie par la fréquence d'étalement.

9. Capteur optoélectronique selon l'une des revendications précédentes,
**caractérisé en ce que** les moyens pour la suppression adaptative des perturbations comprennent des moyens de palpage pour palper le signal reçu à la cadence de la séquence d'étalement, des moyens (32) pour transformer le signal palpé dans la plage de fréquences, un détecteur de courbe enveloppe (34), servant à l'analyse des perturbations dans la plage de fréquences, afin de détecter des amplitudes de signaux qui dépassent une valeur seuil prédéterminée, et des moyens de filtration (36), afin d'affaiblir au moins les amplitudes qui dépassent la valeur seuil dans la plage de fréquences.

10. Capteur optoélectronique selon la revendication 9,
**caractérisé en ce qu'**il est prévu des moyens pour transformer en retour le signal filtré par les moyens de filtration (36) vers la plage temporelle.

11. Capteur optoélectronique selon la revendication 10,
**caractérisé en ce que** le désétalement du signal reçu a lieu selon la transformation en retour vers la plage temporelle.

12. Capteur optoélectronique selon l'une des revendications précédentes,
**caractérisé en ce que** les moyens pour la suppression adaptative des perturbations comprennent un filtre d'écrêtage (40).

13. Capteur optoélectronique selon la revendication 12,
**caractérisé en ce que** le filtre d'écrêtage (40) est réalisé pour fixer le signal reçu dans la plage temporelle à une valeur positive (48) ou négative (50) prédéterminée en cas de passage au-dessus ou au-dessous d'une valeur de référence prédéterminée (46), pour limiter le signal reçu, en cas de passage au-dessus ou au-dessous d'une valeur seuil positive (52) ou négative (54) respectivement prédéterminée, à cette valeur seuil (52 ou 54), ou pour mettre le signal reçu à zéro lors du passage au-dessus ou au-dessous d'une valeur seuil positive (56) ou négative (58) respective prédéterminée.

14. Capteur optoélectronique selon la revendication 12 ou 13,
**caractérisé en ce que** le désétalement du signal reçu a lieu d'après le filtrage par écrêtage.

15. Procédé pour la suppression de perturbations dans un capteur optoélectronique (14) comprenant au moins un émetteur de lumière (16) pour émettre des signaux lumineux (s(t)) dans une zone de surveillance (18) et au moins un récepteur de lumière (20) pour recevoir des signaux lumineux, dans lequel les signaux lumineux reçus (r(t)) sont convertis dans le récepteur de lumière en signaux de réception électrique,
**caractérisé en ce que**
les signaux lumineux émis (s(t)) par l'émetteur de lumière (16) sont engendrés en se basant sur un signal de départ (60) étalé selon le procédé d'étalement en fréquence et affecté d'un offset (22) pour engendrer un signal unipolaire, et **en ce que** pour la suppression des perturbations, les perturbations respectivement actuelles sont mesurées de façon répétée ou en continu, analysées dans la plage temporelle et/ou la plage de fréquences, et sont compensées en fonction du résultat respectif des analyses de perturbations.
